# EUROPEAN PATENT APPLICATION

(11) **EP 3 173 172 A1**
(43) Date of publication of application: **31.05.2017**
(21) Application number: 16190443.8
(22) Date of filing: 23.09.2016
(51) Int. Cl.: B23H 7/26, B23H 11/00, B23H 3/00

(54) **ELECTROCHEMICAL MACHINING APPARATUS WITH CLAMPING DEVICE FOR CLAMPING THE WORKPIECE TO A BASE HOLDING THE TOOL-ELECTRODE**

(30) Priority: 27.11.2015 TW 104139617
(71) Applicant: Intai Technology Corp., Taichung City 40852 (TW)
(72) Inventor: Tsai, Yung-Fang, 40852 Taichung City (TW); Hsieh, Yao-Chung, 40852 Taichung City (TW)
(74) Representative: Lang, Christian

(57) **Abstract**

An electrochemical machining apparatus with a clamping device (1, 2) and an electrode (4) aligned in the same direction includes a platen (1), a lower seat (2), an anode electrode (3) and a cathode electrode (4). The platen (1) and the lower seat (2) are located relatively for clamping. A working space is formed between the platen (1) and the lower seat (2) for allowing a workpiece (6) to be placed therein. The anode electrode (3) is disposed on the platen and is electrically connected to the workpiece (6). The cathode electrode (4) is disposed inside the lower seat (2) and is corresponding to the working space. An isolation layer (21) is disposed between the cathode electrode and the lower seat to avoid an electrical connection. A working gap (A) with a constant distance is preserved between the cathode electrode and the workpiece for allowing an electrolyte to flow therethrough and performing electrochemical machining.

## Description

### BACKGROUND

### Technical Field

The present disclosure relates to an electrochemical machining apparatus with a clamping device and an electrode aligned in the same direction. More particularly, the present disclosure relates to a high-precision electrochemical machining apparatus which is capable of performing accurate deep cutting on a surface of a workpiece, and a clamping device and an electrode thereof are aligned in the same direction for further reducing an initial deviation value effectively.

### Description of Related Art

As semiconductor industry, optoelectronics and biomedical industry continue to flourish, many products are developed with the trend towards ultra-precision, high-density, intelligence and miniaturization. In all related manufacturing methods, an electrochemical machining (ECM) process has the biggest edge, which is a processing technique that is relatively suitable for use in mass production with high-precision, and has the advantages that cutting tools are less likely to be worn out, workpieces to be processed are not limited by the hardness and strength of metal material, the workpieces with higher hardness can be applied, the processing speed is relatively fast, and the workpieces processed have good surface smoothness with no edge burrs generated on the edges, and have small rounded edges, etc.

When an electrochemical machining process is performed, a workpiece is first electrically connected to an anode electrode of a power source, and a machining electrode is electrically connected to a cathode electrode of the power source, and an electrolyte is enabled to flow between the workpiece and the machining electrode, thereby removing redundant material of the workpiece by a reaction between the workpiece and cathode ions generated by the cathode electrode based on an anodic dissolution principle, thus accomplishing the purpose of electrochemical machining process.

A conventional ECM apparatus includes a tank, a power supply, a machining electrode and a driving module. The tank is configured to receive a workpiece and an electrolyte. The machining electrode includes an electrode substrate having an extending length and at least one agitating structure disposed around the electrode substrate. The electrode substrate includes a first end and a second end. The second end is configured to perform electrochemical machining on the workpiece, thereby forming a machined structure thereon. The driving module moves along with the first end of the electrode substrate for displacing and rotating the electrode substrate, thereby enabling the rotated agitating structure to press and agitate the electrolyte to flow through the machined structure, thus enhancing circulation of the electrolyte in the machined structure.

When the aforementioned ECM apparatus performs electrochemical machining on a workpiece, the driving module (i.e. a feed device) has to be controlled to move the machining electrode, so as to perform electrochemical cutting on the workpiece. However, when being applied to a high-precision cutting process, the ECM process using the feed device to control a machining electrode has the following disadvantages.

1. When it is desired to perform high-precision shallow cutting on the workpiece, the driving displacement accuracy of the feed device has to be increased at the same time, thus likely increasing the tool cost, and being disadvantageous to mass processing.

2. When the feed device has been operated for a long period of time, its feeding accuracy will likely fail to meet standard tolerance due to the aging of its mechanical components, thus easily causing its product to lack fidelity, and resulting in a poor yield.

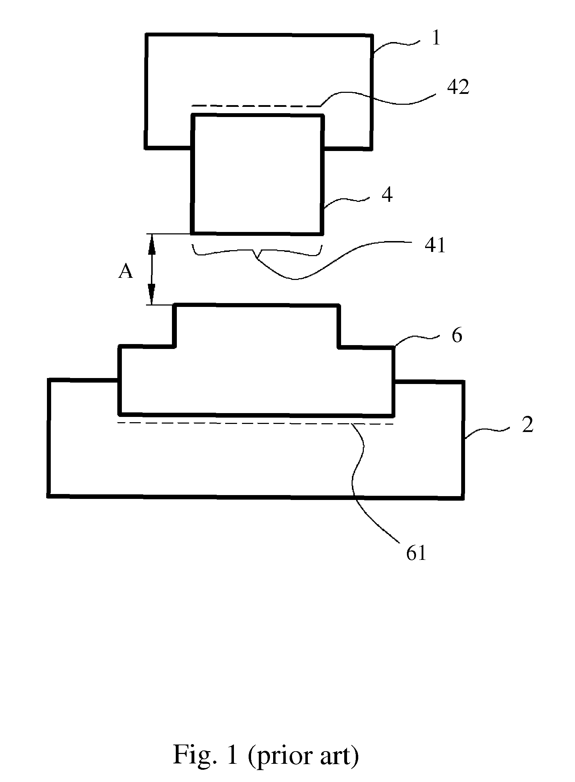

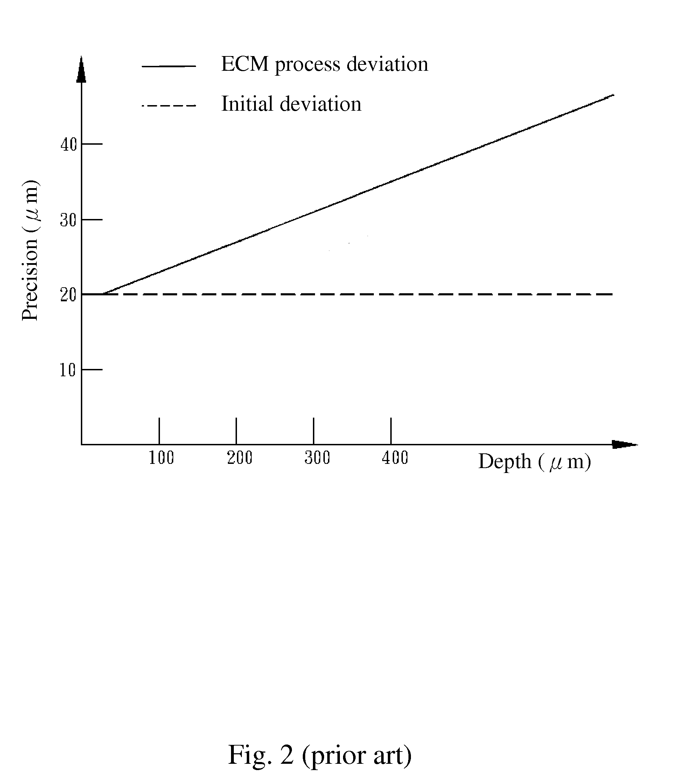

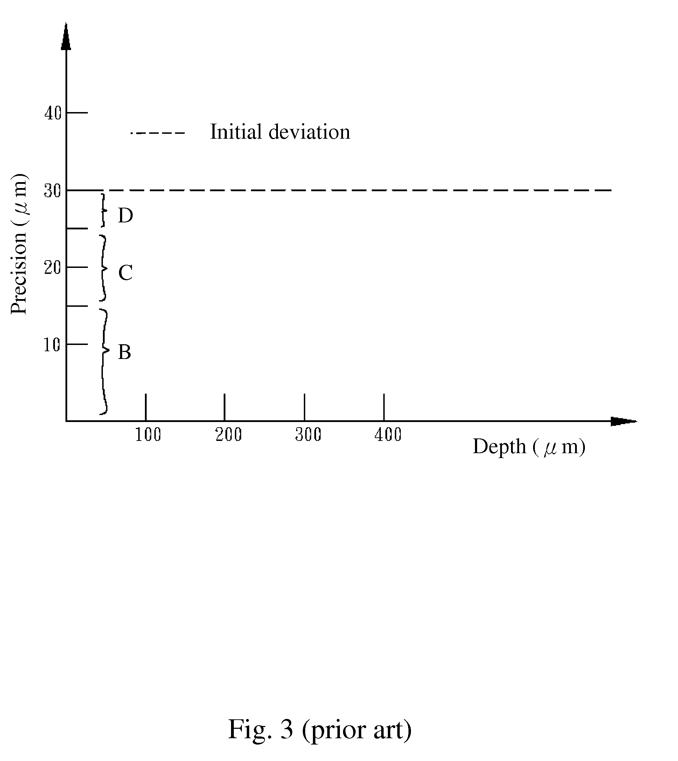

In Fig. 1, another conventional ECM apparatus with a clamping device and an electrode aligned in the opposite direction is provided. This conventional ECM apparatus includes a Z-axis feed device 1, a clamping device 2, an electrode 4, an electrode surface 41, an electrode fixing surface 42, a workpiece 6, a workpiece fixing surface 61 and a working gap A. When the ECM process is performed, the conventional ECM apparatus is affected by the Z-axis feed device 1 to generate two situations. The two situations are shown in Figs. 2 and 3, respectively. In Figs. 1 and 2, there is no Z-axis feed device in the conventional ECM apparatus, and the clamping device 2 and the electrode 4 are aligned in the opposite direction. This structure has an initial deviation value which is about 20 µm because of its relative positions, as shown in Fig. 2. A precision of the conventional ECM apparatus and a depth thereof have the same increasing ratio. In Figs. 1 and 3, the conventional ECM apparatus has the Z-axis feed device 1, and the clamping device 2 and the electrode 4 are aligned in the opposite direction. This structure has an initial deviation value which is about 30 µm because of three deviations, as shown in Fig. 3. The first deviation is produced by moving and positioning of the Z-axis feed device 1 in a region B. The second deviation is produced by the clamping device 2 and the electrode 4 aligned in the opposite direction in a region C. The third deviation is produced by the ECM process in a region D. However, the advantage of the structure is that the electrode 4 is moved by the Z-axis feed device 1, and when the ECM process is performed, the third deviation maintains a constant value and is not changed as the depth is increased.

In view of the foregoing, the conventional ECM process with the clamping device and the electrode aligned in the opposite direction has a disadvantage that it is difficult to decrease the initial deviation value. Therefore, the present disclosure provides an ECM apparatus with a clamping device and an electrode aligned in the same direction which is capable of more effectively reducing an initial deviation value. In addition, the ECM apparatus of the present disclosure does not use the feed device to control the depth of ECM cut, thereby decreasing the cost of the ECM apparatus and maintaining a high and stable yield after the ECM process.

### SUMMARY

According to one aspect of the present disclosure, an electrochemical machining apparatus with a clamping device and an electrode aligned in the same direction includes a platen, a lower seat, an anode electrode and a cathode electrode. The platen and the lower seat are located relatively for clamping. A working space is formed between the platen and the lower seat for allowing a workpiece to be placed therein. The anode electrode is disposed on the platen and is electrically connected to the workpiece. The cathode electrode is disposed inside the lower seat and is corresponding to the working space. An isolation layer is disposed between the cathode electrode and the lower seat to avoid an electrical connection. A working gap with a constant distance is preserved between the cathode electrode and the workpiece for allowing an electrolyte to flow therethrough and performing electrochemical machining. Thus, the anode electrode is electrically connected to the workpiece. The cathode electrode is corresponding to a portion desired to be cut of the workpiece. A voltage is subsequently applied to enable the electrolyte to flow through the working gap so as to perform electrochemical machining to cut the workpiece and form a groove shape configured by the cathode electrode.

### BRIEF DESCRIPTION OF THE DRAWINGS

The present disclosure can be more fully understood by reading the following detailed description of the embodiment, with reference made to the accompanying drawings as follows:
Fig. 1 shows a schematic view of a conventional electrochemical machining apparatus with a clamping device and an electrode aligned in the opposite direction;
Fig. 2 shows a graph of a precision and a depth of the electrochemical machining apparatus without a Z-axis feed device of Fig. 1;
Fig. 3 shows a graph of a precision and a depth of the electrochemical machining apparatus with a Z-axis feed device of Fig. 1;
Fig. 4 shows a schematic view of an electrochemical machining apparatus with a clamping device and an electrode aligned in the same direction according to one embodiment of the present disclosure; and
Fig. 5 shows a graph of a precision and a depth of the electrochemical machining apparatus of Fig. 4.

### DETAILED DESCRIPTION

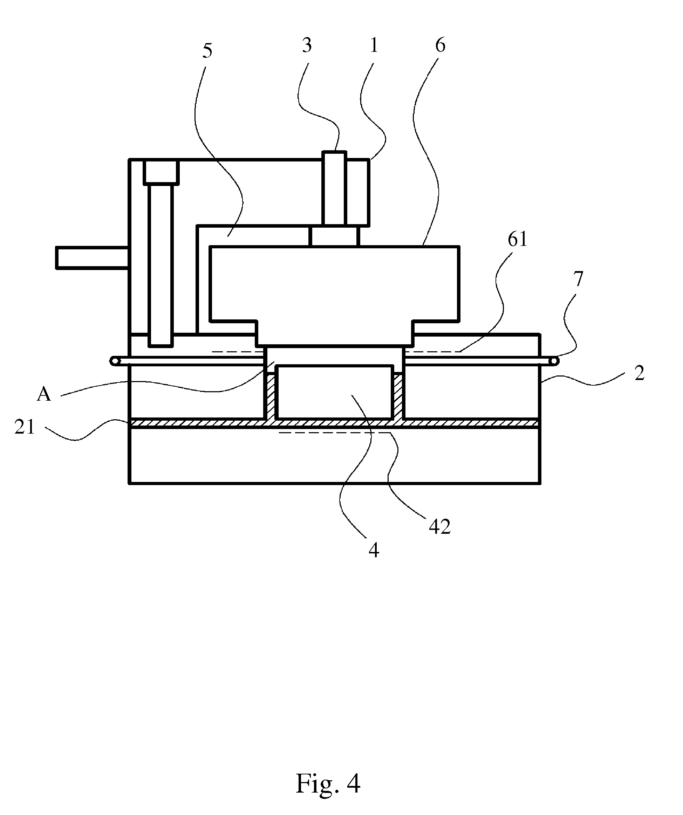

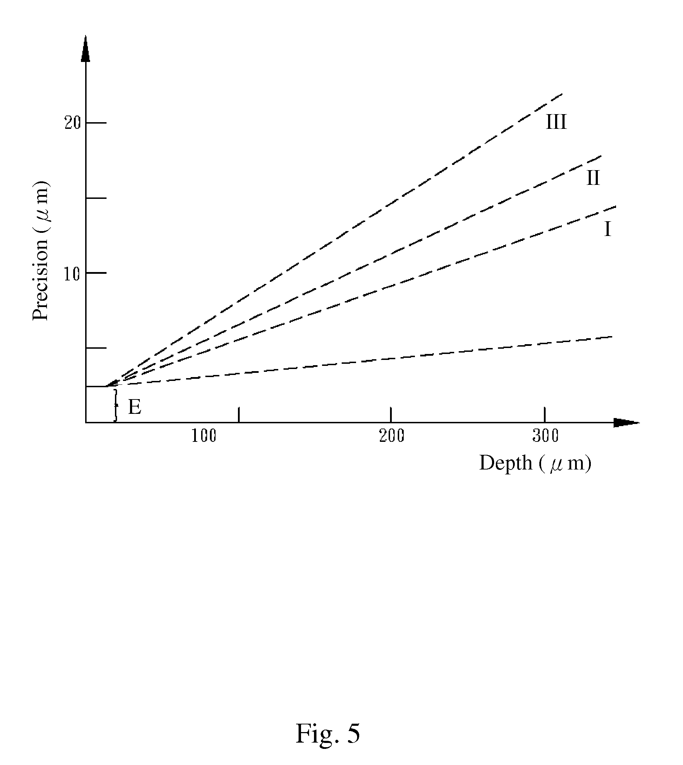

The present disclosure relates to an electrochemical machining apparatus with a clamping device and an electrode aligned in the same direction. More particularly, the present disclosure relates to a high-precision electrochemical machining apparatus which is capable of performing accurate deep cutting on a surface of a workpiece, and reducing an initial deviation value effectively. Fig. 4 shows a schematic view of an electrochemical machining apparatus with a clamping device and an electrode aligned in the same direction according to one embodiment of the present disclosure; and Fig. 5 shows a graph of a precision and a depth of the electrochemical machining apparatus of Fig. 4. The electrochemical machining apparatus with the clamping device and the electrode aligned in the same direction includes a platen 1, a lower seat 2, an anode electrode 3 and a cathode electrode 4.

The platen 1 and the lower seat 2 are located relatively for clamping. A working space 5 is formed between the platen 1 and the lower seat 2 for allowing a workpiece 6 to be placed therein. The anode electrode 3 is disposed on the platen 1 and is electrically connected to the workpiece 6. The workpiece 6 is disposed on the workpiece positioning surface 61. The cathode electrode 4 is disposed on an electrode positioning surface 42 inside the lower seat 2 and is corresponding to the working space 5. An isolation layer 21 is disposed between the cathode electrode 4 and the lower seat 2 to avoid an electrical connection. A working gap A with a constant distance is preserved between the cathode electrode 4 and the workpiece 6 for allowing an electrolyte to flow therethrough and performing electrochemical machining.

Thus, the anode electrode 3 is electrically connected to the workpiece 6, the cathode electrode 4 is corresponding to a portion to be cut of the workpiece 6, and the electrolyte is subsequently applied to flow through the working gap A along a tube 7. Therefore, a groove shape configured by the cathode electrode 4 can be formed on the workpiece.

According to the aforementioned description, the electrochemical machining apparatus with the clamping device and the electrode aligned in the same direction of the present disclosure can perform electrochemical machining on a portion to be cut of the workpiece 6 without a feed device to control the cathode electrode 4, so that the high processing expenditure caused by the high-precision feed device can be reduced effectively. In addition, the electrochemical machining apparatus of the present disclosure can control the cutting depth of the workpiece 6 by using the fixed working gap A, such that a stable yield rate can be further provided. Moreover, the electrochemical machining apparatus of the present disclosure uses the workpiece 6 disposed in the working space 5 between the platen 1 and the lower seat 2 to perform electrochemical machining and provides a simple and convenient operation. In addition, the cathode electrode 4 of the present disclosure is disposed inside the lower seat 2 (i.e. a clamping device), and the processed surface of the workpiece 6 and the cathode electrode 4 are aligned in the same direction, thereby effectively reducing the initial deviation value during the ECM process.

In Fig. 5, the present disclosure relates to an electrochemical machining apparatus with a clamping device and an electrode aligned in the same direction, wherein the initial deviation value is only about 2 µm in a region E, and the initial deviation value is increased as the depth is increased. However, when the ECM process is operated under an appropriate voltage, the precision of the electrochemical machining apparatus of the present disclosure can be smaller than 20 µm under 300 µm of the processing depth, and the precision even can be smaller than 10 µm under 100 µm of the processing depth. In Fig. 5, there are a voltage strength I, a voltage strength II and a voltage strength III which represent a first voltage, a second voltage and a third voltage, respectively. The second voltage is smaller than the first voltage and greater than the third voltage. Therefore, the present disclosure is quite suitable for performing high-precision shallow cutting on the workpiece.

## Claims

1. An electrochemical machining apparatus with a clamping device and an electrode aligned in the same direction, comprising a platen (1), a lower seat (2), an anode electrode (3) and a cathode electrode (4);
wherein the platen (1) and the lower seat (2) are located relatively for clamping, a working space (5) is formed between the platen (1) and the lower seat (2) for allowing a workpiece (6) to be placed therein, the anode electrode (3) is disposed on the platen (1) and is electrically connected to the workpiece (6), the cathode electrode (4) is disposed inside the lower seat (2) and is corresponding to the working space (5), an isolation layer (21) is disposed between the cathode electrode (4) and the lower seat (2) to avoid an electrical connection, a working gap (A) with a constant distance is preserved between the cathode electrode (4) and the workpiece (6) for allowing an electrolyte to flow therethrough and performing electrochemical machining;
thus, the anode electrode (3) is electrically connected to the workpiece (6), the cathode electrode (4) is corresponding to a portion desired to be cut of the workpiece (6), and a voltage is subsequently applied to enable the electrolyte to flow through the working gap (A) so as to perform electrochemical machining to cut the workpiece (6) and form a groove shape configured by the cathode electrode (4).
